# EUROPÄISCHE PATENTSCHRIFT

(11) **EP 3 134 350 B1**
(45) Veröffentlichungstag und Bekanntmachung des Hinweises auf die Patenterteilung: **19.02.2020**
(21) Anmeldenummer: 15717486.3
(22) Anmeldetag: 20.04.2015
(51) Int. Cl.: C02F 1/32, H01J 61/16, H01J 65/04

(54) **VORRICHTUNG ZUR PHOTOCHEMISCHEN BEHANDLUNG ODER REINIGUNG EINES FLÜSSIGEN MEDIUMS**
DEVICE FOR THE PHOTOCHEMICAL TREATMENT OR CLEANING OF A LIQUID MEDIUM
DISPOSITIF DE TRAITEMENT PHOTOCHIMIQUE OU NETTOYAGE D'UN MILIEU LIQUIDE

(30) Priorität: 24.04.2014 DE 102014207690
(43) Veröffentlichungstag der Anmeldung: 01.03.2017
(73) Patentinhaber: SICO Technology GmbH, 9530 Bad Bleiberg (AT)
(72) Erfinder: EGNER, Siegfried, 74740 Adelsheim (DE); ELKIN, Bentsian, 70794 Filderstadt (DE); SANTAMARIA, Jorge Toro, 70563 Stuttgart (DE); NADRAG, Walter, 9530 Bad Bleiberg (AT)
(74) Vertreter: DREISS Patentanwälte PartG mbB
(86) Internationale Anmeldenummer: PCT/EP2015/058508
(87) Internationale Veröffentlichungsnummer: WO 2015/162089

(56) Entgegenhaltungen:
- CA-A1- 2 576 411
- JP-A- 2004 146 077
- US-A- 5 395 522
- US-A- 5 614 723
- US-A1- 2008 185 536
- US-A1- 2008 292 497
- US-B1- 8 475 725

## Beschreibung

Die vorliegende Erfindung betrifft eine Vorrichtung zur photochemischen Behandlung eines flüssigen Mediums nach dem Oberbegriff des Anspruchs 1. Die Erfindung dient insbesondere zur photochemischen Reinigung eines verunreinigten Wassers.

### Stand der Technik

Aus der DE 10 2006 022 970 B3 bspw. ist die Erzeugung von UV-Licht (Wellenlänge ca. 100 bis 400 nm) durch eine Anregung von Gasen oder Gasgemischen mit hochfrequenten elektromagnetischen Wellen, insbesondere mit Mikrowellen, bekannt. Die Vorrichtung erzeugt UV-Licht, das flächig abgestrahlt wird.

Aus der EP 0 458 140 A1 ist ein Excimer-Strahler bekannt, der elektromagnetische Strahlung im UV-Wellenlängenbereich emittiert.

Eine aus der DE 10 2009 025 667 A1 bekannte Lampe arbeitet ähnlich wie eine mit Gas gefüllte Leuchtstoffröhre. Durch eine geeignete Anregung (z. B. durch energiereiche Elektronen) der Moleküle dieses Gases werden eine oder mehrere Elektronen der in dem Gas befindlichen Moleküle auf eine energiereichere Elektronenbahn gehoben. Sobald diese Elektronen wieder auf die ursprüngliche Elektronenbahn zurückkehren, wird Energie frei, die in Form von Licht, insbesondere UV-Licht emittiert wird.

Aus der DE 195 07 189 A1 ist ein Excimer-Strahler zur Behandlung von verunreinigten Flüssigkeiten bekannt. Dieser Excimer-Strahler weist zwei Elektroden auf, von denen eine in Kontakt mit der zu reinigende Flüssigkeit steht. Beide Elektroden befinden sind an einem Bestrahlungskolben angeordnet.

Diese Entladungslampen sind hinlänglich bekannt und haben sich in der Praxis bewährt. Ein besonderer Vorteil solcher lonisationsstrahler mit einem Gas, das bspw. Quecksilber oder Verbindungen davon enthält, ist darin zu sehen, dass ein Großteil des emittierten Lichts bspw. im Fall von Quecksilber eine Wellenlänge von etwa 254 nm hat und dieses Licht effektiv mit einem guten Wirkungsgrad erzeugt werden kann.

Außerdem ist aus der EP 0 458 140 bekannt, Edelgase, z.B. Xenon, anstatt des Quecksilbers in Entladungslampen zu verwenden. Xenon emittiert UV-Licht mit einer Wellenlänge von etwa 172 nm, das noch energiereicher ist als das von Quecksilber emittierte Licht. Das Xenon-UV-Licht wird zum Beispiel zum Aufrauen von Oberflächen in der industriellen Fertigungstechnik eingesetzt. Es ist auch bekannt, dass das energiereiche Xenon-UV-Licht zur Reinigung von Abwasser eingesetzt werden kann. Das Xenon-UV-Licht spaltet aus H₂O ein sog. Hydroxyl-Radikal ab. Dieses Hydroxyl-Radikal kann zum Abbau von Verunreinigungen im Abwasser genutzt werden.

So wird das ausgesandte UV-Licht bekanntermaßen dazu verwendet, verunreinigtes Wasser bspw. in Abwassereinigungsanlagen, Prozesswasseraufbereitungsanlagen, Trinkwasseraufbereitungsanlagen zu behandeln oder um in Fotoreaktoren chemische Reaktionen, bspw. Synthesen, herbeizuführen. Insbesondere für diese Anwendungen ist in der Regel eine Vielzahl von UV-Lichtquellen nötig, die gleichzeitig über viele Stunden hin dauerhaft betrieben werden.

Aus der US 5 614 723 ist eine Vorrichtung zur photochemischen Behandlung eines flüssigen Mediums bekannt, bei der ein zylindrisches Gehäuse und ein im Inneren des Gehäuses angeordneter statischer Mischer als Elektroden für einen UV-Licht erzeugenden Körper dienen. Im Inneren des Gehäuses ist ein Glaszylinder angeordnet. Das Gehäuse und der Glaszylinder begrenzen den UV-Licht erzeugenden Körper.

Der Erfindung liegt die Aufgabe zugrunde, eine Vorrichtung zur photochemischen Behandlung eines flüssigen Mediums, insbesondere zur photochemischen Reinigung eines verunreinigten Wassers, zu schaffen, die einfach aufgebaut ist und damit kostengünstig hergestellt und betrieben werden kann.

Die Aufgabe wird erfindungsgemäß durch eine Vorrichtung zur photochemischen Behandlung einer Flüssigkeit mit den Merkmalen des Anspruchs 1 gelöst.

Der UV-Licht erzeugende Körper arbeitet in der erfindungsgemäßen Vorrichtung ansonsten wie eine Gasentladungslampe.

Die zweite Elektrode zum Betreiben des UV-Licht erzeugenden Körpers kann metallisch ausgebildet sein und ist im oder am UV-Licht erzeugenden Körper angeordnet und dort elektrisch kontaktiert (nicht erfindungsgemäß).

Alternativ kann die zweite Elektrode analog zur ersten Elektrode durch das zu behandelnde Medium eingekoppelt werden (nicht erfindungsgemäß).

In einer nicht erfindungsgemäßen Ausführungsform ist vorgesehen, dass eine Stromzuführung für das kontaktierbare flüssige Medium durch ein im flüssige Medium im Bereich des UV-Licht erzeugenden Körpers angeordnetes Gitter realisiert ist. An das Gitter wird dabei die für den Betrieb der UV-Leuchte benötigte hochfrequente und/oder gepulste elektrische Spannung angelegt.

Die als Gitter ausgeführte Stromzuführung kann dabei gleichzeitig eine gewünschte Verwirbelung des verunreinigten Wassers herbeiführen, um eine gute (Quer-)Durchmischung des Wassers im Strömungskanal zu erreichen. Dies ist erwünscht, damit möglichst große Teile des Wassers in unmittelbarer Nähe der Lichtaustrittsfläche des UV-Licht erzeugenden Körpers vorbeiströmt. Nur in unmittelbarer Nähe der Lichtaustrittsfläche bilden sich die gewünschten Hydoxyl-Radikale. Andere Anordnungen zum Verwirbeln des durch den Strömungskanal strömenden Wassers (z.B. Leitschaufeln, Absätze, Erhebungen, Netze, etc.) sind alternativ oder auch zusätzlich möglich.

In einer nicht erfindungsgemäßen Ausführungsform ist vorgesehen, dass eine Stromzuführung für das kontaktierbare flüssige Medium durch eine elektrisch leitende Wand des mindestens einen UV-Licht erzeugenden Körpers realisiert ist, wobei an die Wand die für den Betrieb der UV-Leuchte benötigte hochfrequente und/oder gepulste elektrische Spannung angelegt ist.

In einer nochmals alternativen nicht erfindungsgemäßen Ausführungsform kann vorgesehen sein, dass eine Stromzuführung für das kontaktierbare flüssige Medium durch eine elektrisch leitende, zum flüssigen Medium hin angeordnete Lichtaustrittsfläche des mindestens einen UV-Licht erzeugenden Körpers realisiert ist. Dabei kann die Lichtaustrittsfläche z.B. aus einem für die erzeugte UV-Strahlung semitransparenten Material hergestellt sein, wobei das Material elektrisch kontaktierbar und elektrisch leitend ist. An dem semitransparenten Material wird dabei die für den Betrieb des UV-Licht erzeugenden Körpers benötigte elektrische Spannung angelegt.

Der Vorteil der elektrischen Kontaktierung des flüssigen Mediums ist besonders groß, wenn der UV-Licht erzeugende Körper zu beiden Seiten Lichtaustrittsflächen aufweist. Der direkte Kontakt des flüssigen Mediums mit dem UV-Licht erzeugenden Körper auf den beiden Seiten wurde bislang nie in Betracht gezogen, da das Anlegen der Hochspannung an wasserführende Teile als unüberwindbare Hürde angesehen wurde. Die Sicherheit ist in der erfindungsgemäßen Vorrichtung immer gewährleistet.

Der beidseitige Kontakt mit dem flüssigen Medium hat jedoch die Vorteile einer besseren Ausnutzung der Strahlung sowie der besseren Kühlung des UV-Licht erzeugenden Körpers.

Folgende Maßnahmen bzw. Ausbildungen können in der erfindungsgemäßen Vorrichtung außerdem vorgesehen sein:

So kann z.B. vorgesehen sein, dass die mit der unter der Betriebsspannung stehenden Seite des UV-Licht erzeugenden Körpers verbundenen Wasseranschlussleitungen von dem Rest der Vorrichtung elektrisch isoliert werden oder zumindest eine hohe Impedanz aufweisen. Hiermit wird einerseits gewährleistet, dass die elektrische Energie in dem UV-Licht erzeugenden Körper wirkt und nicht nach außerhalb abgeleitet wird. Anderseits kann dann zumindest ein Großteil der Vorrichtung geerdet werden, um den Sicherheitsanforderungen zu genügen.

Eine Isolation oder eine hohe Impedanz kann durch unterschiedliche technische Maßnahmen erreicht werden. Einige Ausführungsmöglichkeiten werden weiter hinten genauer beschrieben.

Außerdem kann in der nicht erfindungsgemäßen Vorrichtung vorgesehen sein, dass der mindestens eine UV-Licht erzeugende Körper von einem Transformator mit einem geerdeten Mittelpunkt gespeist wird, so dass an jeder Elektrode jeweils die Hälfte einer Gesamtspannung anliegt. Somit kann auf einfache Weise die entsprechende elektrische Spannung an jeder Elektrode relativ zur Erde halbiert werden, ohne die Gesamtspannung an der UV-Lampe zu reduzieren. Durch die Halbierung der Spannung relativ zur Erde werden etwaige Verluste in den Anschlussleitungen reduziert sowie die Anforderungen an die Hochspannungsisolation der Anschlussleitungen verringert. Alternativ kann bei einem transformatorlosen Ausgang der Stromversorgung eine ähnliche Wirkung, d.h. bipolare Ausgangsspannung, bspw. durch Verwendung einer Vollbrücke erreicht werden.

Als Beispiel nehmen wir einen UV-Licht erzeugenden Körper mit 200 W aktiver elektrischer Leistung, die mit bipolaren Pulsen, mit einer Pulslänge von 2 µs pro Impuls in jeder Polarität (d.h. 4 µs pro bipolaren Puls) mit einer Frequenz von 50 kHz (d.h. Periode 20 µs) angeregt wird. Die Spannungsamplitude beträgt 4 kV.

Der elektrische Anschluss erfolgt mit einem am Mittelpunkt der sekundären Spule geerdeten Trafo, so dass an jeder Elektrode nur die Hälfte der Spannungsamplitude relativ zur Erde anliegt, d.h. 2 kV.

Ausgehend von diesem Beispiel wird gezeigt, dass die Verwendung von hinreichend langen Anschlussleitungen aus isolierendem Material, wie z.B. Plastikrohr oder Gummischlauch, eine hinreichende elektrische Isolation gewährleistet.

An den beiden Wasserelektroden liegt während des Impulses eine Spannung von 2 kV relativ zu Erde an (in gegensätzlichen Polaritäten). Bspw. weisen die fluidischen Zu- bzw. Ableitungen, d. h. die Teile des Strömungskanal vor und hinter dem UV-Licht erzeugenden Körper, einen Querschnitt von 1 cm² und eine Länge von je 2 m auf. Das von dem UV-Licht erzeugenden Körper abgewandte Ende jeder Anschlussleitung ist geerdet. Alle Pumpen, Ventile, Messgeräte, Puffervolumina etc. können sich damit im geerdeten Bereich befinden.

Nehmen wir an, beim Medium handelt es sich um ein sehr hartes Wasser mit einer entsprechend großen elektrischen Leitfähigkeit von ca. 1 mS/cm. Dies bedeutet ein elektrischer Widerstand von ca. 200 kOhm pro Leitung, entsprechend einem Spitzenwert des Stroms von 10 mA, einem Spitzenwert der Leistung von 20 W und einer durchschnittlicher Leistung von unter 4 W. Bei vier parallel geschalteten Wasserleitungen bzw. Strömungskanälen ergibt das eine Verlustleistung von unter 16 W, was weniger als 10% der elektrischen Lampenleistung beträgt und durchaus in Kauf genommen werden kann.

In einer weiteren nicht erfindungsgemäßen Ausbildung wird die hohe elektrische Impedanz durch eine Induktivität (z.B. eine Drossel) realisiert, wobei die Induktivität durch eine um einen Magnetkern gewundene Anschlussleitung realisiert ist. Auf diese Weise kann auch im Falle eines stark elektrisch leitenden Mediums (z.B. Salzwasser) eine hohe Impedanz (hoher Widerstand) zwischen der Elektrode des UV-Licht erzeugenden Körpers und der Erde erreicht werden.

Nehmen wir bspw. an, der magnetische Kern der Drossel hat einen effektiven Querschnitt von ca. 20 cm², eine effektive Länge von 40 cm und eine magnetische Permeabilität im relevanten Frequenzbereich von 5000.

Die Spule umfasst 20 Wicklungen aus Schlauch. Die Induktivität der Drossel beträgt ca. 12mH. Bei einem bipolaren Puls von 4 µs liegt der größte spektrale Anteil der Energie bei einer Frequenz von 250 kHz. Die Drossel-Impedanz beträgt bei dieser Frequenz ca. 180 kOhm - ähnlich wie der ohmsche Widerstand im vorhergehenden Beispiel. Durch den vorwiegend induktiven Charakter der Impedanz ist der Großteil der elektrischen Leistung in diesem Zweig der Schaltung reaktiv, d.h. die Verluste werden noch geringer ausfallen.

In einer erfindungsgemäßen Ausbildung kann z.B. vorgesehen sein, dass der hohe elektrische Widerstand durch mindestens eine dielektrische Unterbrechung in der Anschlussleitung realisiert ist, bspw. als Luftstrecke. In einem solchen Fall kann die Anschlussleitung elektrisch leitend ausgebildet sein. Die dielektrische Unterbrechung kann dabei z.B. in einer Muffe zum Verbinden der Anschlussleitung mit der erfindungsgemäßen Vorrichtung integriert sein.

Alternativ oder zusätzlich ist es erfindungsgemäß auch möglich, dass der hohe elektrische Widerstand bzw. dielektrische Unterbrechung durch eine in der Anschlussleitung angeordnete Pumpe, bspw. eine Zahnradpumpe, Schlauchquetschpumpe oder Kolbenpumpe, realisiert ist. Bei vielen Bauarten von Flüssigkeitspumpen ist der Rückfluss des Mediums durch mechanische Vorrichtungen gesperrt, wie z.B. durch Zahnräder bei einer Zahnradpumpe, durch Ventile und Kolben bei einer Kolbenpumpe, oder durch abgeklemmte Schlauchbereiche einer Schlauchpumpe. Wenn diese Pumpen im Durchgangsbereich des flüssigen Mediums ein dielektrisches Material umfassen, werden diese auch die (zusätzliche) Funktion einer dielektrischen Unterbrechung aufweisen. Eine Schlauchpumpe kann bspw. die beste elektrische Isolation aufweisen.

Es kann außerdem vorgesehen sein, dass das vom UV-Licht erzeugenden Körper abgewandte Ende der Anschlussleitung eine Erdung aufweist. Die Erdung dient dazu, den UV-Licht erzeugenden Körper sicher zu betreiben. Es sollen Störströme sicher abgeleitet und elektrische Störeinkopplungen vermieden werden. Außerdem kann die Erdung im Fehlerfall Personen und Tiere vor hohen Berührungsspannungen schützen.

Alternativ kann auch vorgesehen sein, dass das die Gefäße, wie bspw. ein Vorratsgefäß und ein Auffanggefäß, sowie die dazugehörigen Anschlussleitungen, Pumpen, Messgeräte etc. von der Erde isoliert sind, wobei sie sich damit ungefähr auf dem elektrischen Potential der damit verbundenen Elektrode befinden.

Ausführungsbeispiele der Erfindung sind in den Figuren dargestellt und werden in der nachfolgenden Beschreibung näher erläutert. Es zeigen, jeweils in schematischer Form:
Figur 1 eine nicht erfindungsgemäße Vorrichtung zur photochemischen Behandlung eines flüssigen Medium in einer ersten Ausführungsform;
Figur 2 die nicht erfindungsgemäße Vorrichtung in einer zweiten Ausführungsform;
Figur 3 die erfindungsgemäße Vorrichtung in einem möglichen Umfeld.

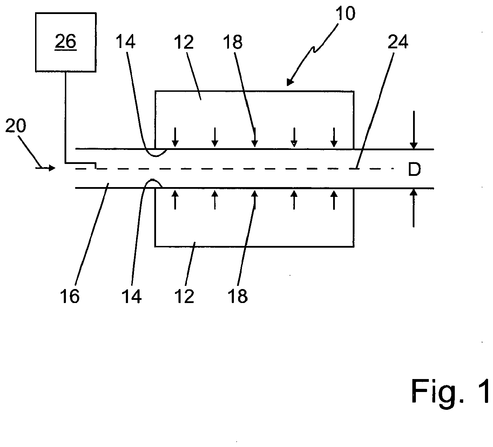

Figur 1 zeigt eine nicht erfindungsgemäße Vorrichtung 10 zur Behandlung oder Reinigung eines flüssigen Mediums in einer Seitenansicht in einer ersten Ausführungsform. Das flüssige Medium ist vorzugsweise verunreinigtes Wasser.

Die Vorrichtung 10 von Figur 1 umfasst zwei UV-Licht erzeugende Körper oder Leuchten 12, die mit ihrer UV-Lichtaustrittsfläche 14 einen Bereich eines Strömungskanals 16 für verunreinigtes Wasser bilden. Selbstverständlich können auch mehr als zwei UV-Licht erzeugende Körper 12 mit ihren Lichtaustrittsflächen 14 hintereinander angeordnet werden. Der Lichtaustritt des UV-Lichts aus der Lichtaustrittsfläche 14 ist durch Pfeile 18 dargestellt. Eine Strömungsrichtung des verunreinigten Wassers ist mit einem Pfeil 20 angegeben.

Der UV-Licht erzeugende Körper 12 kann flach, kubisch, rund, oval oder ringförmig ausgebildet sein, vorzugsweise ist der UV-Licht erzeugenden Körper 12 als ein flacher Quader ausgebildet. Wichtig ist, dass seine UV-Lichtaustrittsfläche 14 den Strömungskanal 16 begrenzt und direkt zumindest einen Bereich einer Wandung des Strömungskanals 16 bildet. Das verunreinigte Wasser kann damit unmittelbar an der UV-Lichtaustrittsfläche 14 vorbeiströmen.

Der UV-Licht erzeugende Körper 12 kann im Innenraum Verstärkungsstützen aufweisen (nicht dargestellt). Dies dient einer größeren Stabilität des UV-Licht erzeugenden Körpers 12.

Der UV-Licht erzeugenden Körper 12 umfasst als Füllgas vorzugsweise Xenon und arbeitet nach dem bekannten Prinzip der Gasentladung, wobei durch eine Anregung des Xenon-Gases mit einer hochfrequenten und/oder gepulsten elektrischen Spannung vorzugsweise eine dielektrische Barriereentladung (DBD) entsteht und dadurch ein UV-Licht mit einer Wellenlänge von ca. 172 nm erzeugt wird.

Prinzipiell sind auch andere Edelgase, wie z.B. Helium, Argon, Krypton oder Neon anwendbar. Möglich sind dabei auch Mischungen mehrerer Edelgase und/oder Mischungen mit entsprechenden Halogenen, wie Fluor, Chlor, Brom oder Jod. Wichtig ist, dass Licht mit einer Wellenlänge unter 185 nm erzeugt wird, weil dieses Licht sehr energiereich ist und eine Fotolyse des Wassers ermöglicht. Dadurch werden die im Wasser enthaltenen Verunreinigungen zu unschädlichen Substanzen oxidiert.

Der Strömungskanal 16 ist vorzugsweise rechteckig ausgebildet. Er könnte aber auch einen beliebig anderen Querschnitt aufweisen, wobei abschnittsweise die Form der Leuchte 12 dem Querschnitt angepasst werden muss, um einen Energieverlust durch Umpumpen von verunreinigtem Wasser zu vermeiden.

Die Darstellungen sind in den Figuren zur besseren Verdeutlichung nicht maßstabsgerecht. Eine bevorzugte Dicke D des Strömungskanals 16 liegt bei etwa 1 mm, die Breite ist im Wesentlichen beliebig. Als obere Grenze für die Dicke D des Strömungskanals 16 haben sich 10 cm erwiesen. Bessere Reinigungsergebnisse stellen sich bei Dicken kleiner 5 cm und bevorzugt kleiner 1 cm ein.

Im Innern des Strömungskanals 16 ist ein metallisches Gitter 24 parallel zu den Lichtaustrittsflächen 14 angeordnet. Das Gitter 24 kann ein Drahtgitter aus dünnen Edelstahldrähten sein. Das Gitter 24 ist elektrisch kontaktiert und wird von einem Pulsgenerator 26 mit geeigneten elektrischen Impulsen beaufschlagt.

Das Gitter 24 dient dazu, das durch den Strömungskanal 16 strömende, verunreinigte Wasser elektrisch zu kontaktieren, so dass das durchströmende Wasser eine Elektrode zum Betreiben des UV-Licht erzeugenden Körpers 12 bildet. An dem Gitter 24 werden dabei durch den Pulsgenerator 26 die elektrischen Signale angelegt, die der UV-Licht erzeugende Körper 12 für den Betrieb benötigt. Die Gegenelektrode kann innerhalb oder außerhalb des UV-Licht erzeugende Körpers 12 angeordnet sein und ist nicht dargestellt.

In der Figur 1 ist ein (erster) elektrischer Anschluss 35 des Gitters dargestellt. Die Gehäuse der UV-Licht erzeugenden Körper 12 können geerdet sein (siehe das Bezugszeichen 34) und einen zweiten elektrischen Anschluss bilden.

Eine zweite Elektrode zum Betreiben des UV-Licht erzeugenden Körpers 12 kann auch metallisch ausgebildet sein und dann im oder am UV-Licht erzeugenden Körper 12 angeordnet und dort elektrisch kontaktiert sein.

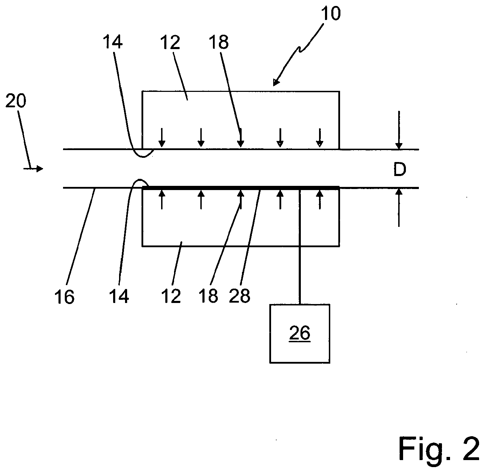

Figur 2 zeigt die nicht erfindungsgemäße Vorrichtung 10 zur Behandlung oder Reinigung von verunreinigtem Wasser in einer Seitenansicht in einer zweiten Ausführungsform. Im Unterschied zur ersten Ausführungsform wird in der zweiten Ausführungsform die Lichtaustrittfläche 14 des UV-Licht erzeugenden Körpers 12 elektrisch kontaktiert. Dazu ist die Lichtaustrittsfläche 14 elektrisch leitend ausgebildet. Dabei kann die Lichtaustrittsfläche 14 z.B. aus einem für die erzeugte UV-Strahlung semitransparenten Material 28 hergestellt sein, wobei das Material 28 elektrisch kontaktierbar und elektrisch leitend ist. An dem semitransparenten Material 28 werden dabei durch den Pulsgenerator 26 die elektrischen Signale angelegt, die der UV-Licht erzeugende Körper 12 für den Betrieb benötigt.

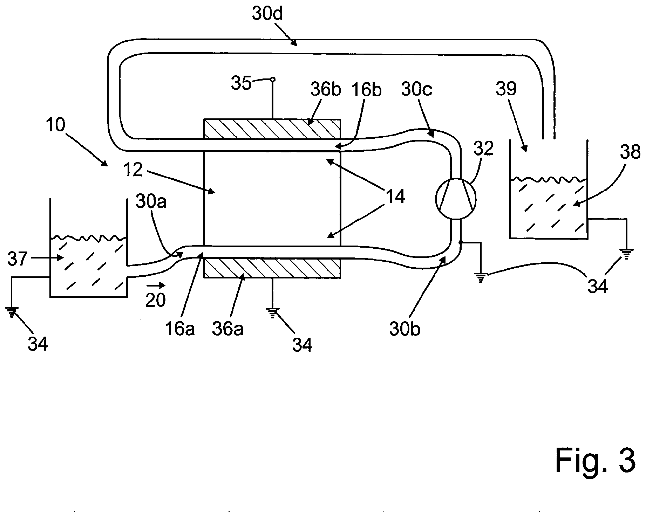

Figur 3 zeigt eine Ausführungsform der erfindungsgemäßen Vorrichtung 10 in einem möglichen Umfeld. An dem als flachen Quader ausgebildeten UV-Licht erzeugenden Körper 12 sind beidseitig unmittelbar an den jeweiligen Lichtaustrittsflächen 14 Strömungskanäle 16a und 16b ausgebildet. Jeder Strömungskanal 16a und 16b ist auf einer ersten Seite durch eine metallische Wand 36a und 36b begrenzt und auf der zweiten, gegenüberliegenden Seite durch die Lichtaustrittsfläche 14 des UV-Licht erzeugenden Körpers 12 begrenzt. Jede metallische Wand 36a und 36b dient gleichzeitig auch als Elektrode. Die Elektrode 36a ist geerdet (siehe Bezugszeichen 34), während an die Elektrode 36b über den elektrischen Anschluss 35 die Betriebsspannung an den UV-Licht erzeugenden Körper 12 angelegt ist.

Der Strömungskanal 16a ist über eine Anschlussleitung 30a mit einem Vorratsbehälter 37 verbunden. Der Strömungskanal 16b ist über eine Anschlussleitung 30d mit einem Auffangbehälter 38 verbunden. Außerdem sind die Strömungskanäle 16a und 16b über weitere Anschlussleitungen 30b und 30c über eine Pumpe 32, z.B. eine Schlauchpumpe, miteinander verbunden. Das Wasser wird also zunächst aus dem Vorratsbehälter 37 über den geerdeten Strömungskanal 16a gepumpt. Anschließend wird das Wasser durch die Anschlussleitungen 30b und 30c in den Strömungskanal 16b gepumpt, der mit der hohen Betriebsspannung des UV-Licht erzeugenden Körpers 12 beaufschlagt ist. Danach wird das behandelte Wasser über die Anschlussleitung 30d im Auffangbehälter 38 gesammelt. Beide Behälter 37 und 38 sind geerdet (siehe jeweils Bezugszeichen 34).

Eine elektrische Isolation zwischen der sich im Betriebszustand unter der Spannung befindenden Anschlussleitung 30d und dem geerdeten Auffangbehälter 38 wird durch die Luftstrecke 39 gewährleistet. Eine elektrische Isolation zwischen der unter der Spannung stehenden Anschlussleitung 30c und der geerdeten Leitung 30b wird durch die Schlauchpumpe 32 gewährleistet, die im Durchflussbereich dielektrisch wirkende (elektrisch isolierende) Bauteile umfasst.

Die Erdungen 34 dienen dazu, den UV-Licht erzeugenden Körper 12 sicher zu betreiben. Es sollen Störströme sicher abgeleitet und elektrische Störeinkopplungen vermieden werden.

Die Forschungsarbeiten, die zu diesen Ergebnissen geführt haben, wurden von der Europäischen Union gefördert.

## Patentansprüche

1. Vorrichtung (10) zur photochemischen Behandlung eines flüssigen Mediums, wobei die Vorrichtung (10) zwei Strömungskanäle (16a, 16b) zum Durchleiten des flüssigen Mediums aufweist, die zumindest bereichsweise von einer UV-Lichtaustrittsfläche (14) mindestens eines UV-Licht erzeugenden Körpers (12) begrenzt werden, **dadurch gekennzeichnet, dass** der UV-Licht erzeugende Körper (12) als flacher Quader ausgebildet ist und die Strömungskanäle (16a, 16b) beidseitig unmittelbar an dessen jeweiligen Lichtaustrittsflächen (14) ausgebildet sind, dass die Strömungskanäle (16a, 16b) jeweils auf einer ersten Seite durch eine metallische Wand (36a, 36b) und auf einer zweiten, gegenüberliegenden Seite durch die Lichtaustrittsfläche (14) des UV-Licht erzeugenden Körpers (12) begrenzt werden, dass die jeweilige metallische Wand (36a, 36b) als Elektrode dient, wobei eine der Elektroden (36a) geerdet ist und an der anderen Elektrode (36b) die Betriebsspannung an den UV-Licht erzeugenden Körper (12) angelegt ist, dass das flüssige Medium in jedem Strömungskanal (16a, 16b) direkt mittels der Elektroden (36a, 36b) kontaktiert wird, und dass im Betrieb der Vorrichtung zwischen den Kanälen eine Potentialdifferenz angelegt wird und durch diese Spannung die elektrische Energie in das Plasma des UV-Licht erzeugenden Körpers eingekoppelt wird, wodurch das Plasma gezündet bzw. aufrechterhalten wird.

2. Vorrichtung nach Anspruch 1, **dadurch gekennzeichnet, dass** mindestens eine mit einer Elektrode (36b) verbundene Anschlussleitung (30c, 30d) des flüssigen Mediums während des Betriebs des UV-Licht erzeugenden Körpers (12) von der Erde elektrisch isoliert ist.

3. Vorrichtung (10) nach einem der vorhergehenden Ansprüche, **dadurch gekennzeichnet, dass** eine Anschlussleitung (30c, 30d) für das durch die Vorrichtung (10) strömende flüssige Medium von geerdeten Anlageteilen elektrisch isoliert ist oder dass die Anschlussleitung (30c, 30d) selbst eine hohe elektrische Impedanz aufweist.

4. Vorrichtung (10) nach Anspruch 3, **dadurch gekennzeichnet, dass** die hohe elektrische Impedanz durch mindestens eine dielektrische Unterbrechung (39) in der Anschlussleitung (30) realisiert ist.

5. Vorrichtung (10) nach Anspruch 3, **dadurch gekennzeichnet, dass** die elektrische Isolierung bzw. die hohe elektrische Impedanz durch in der Anschlussleitung (30) angeordnete und isolierende Materialien einer Zahnradpumpe, Schlauchquetschpumpe (32) oder Kolbenpumpe realisiert ist.

6. Vorrichtung (10) nach Anspruch 1, **dadurch gekennzeichnet, dass** ein vom UV-licht erzeugenden Körper (12) abgewandtes Ende einer mit einer Elektrode verbundenen Anschlussleitung (30b) eine Erdung (34) aufweist.

## Claims

1. Device (10) for photochemical treatment of a liquid medium, the device (10) comprising two flow channels (16a, 16b) for passing through the liquid medium, the flow channels being at least partially limited by an UV-light emitting surface (14) of at least one UV-light generating body (12), **characterized in that** the UV-light generating body (12) is in the form of a flat parallelepiped and that the flow channels (16a, 16b) are formed on both sides immediately adjacent to its respective light-emitting surfaces (14), that the flow channels (16a, 16b) each are limited on a first side by a metal wall (36a, 36b) and on a second, opposite side by the light-emitting surface (14) of the UV-light generating body (12), that the respective metal walls (36a, 36b) serve as an electrode, wherein one of the electrodes (36a) is grounded and at the other electrode (36b) the operating voltage is applied to the UV-light generating body (12), that the liquid medium in each of the flow channels (16a, 16b) is contacted directly by means of the electrodes (36a, 36b), and that during operation of the device a potential difference is applied between the channels and the electric energy is coupled into the plasma of the UV-light generating party by said voltage so that the plasma is ignited or maintained, respectively.

2. Device as claimed in claim 1, **characterized in that** at least one connecting cable (30c, 30d) of the liquid medium, which is connected to an electrode (36b), is electrically isolated from ground during the operation of the UV-light generating body (12).

3. Device (10) as claimed in one of the preceding claims, **characterized in that** a connecting cable (30c, 30d) for the liquid medium flowing through the device (10) is electrically isolated from grounded parts of the device or that the connecting cable (30c, 30d) itself has a high electric impedance.

4. Device (10) as claimed in claim 3, **characterized in that** the high electric impedance is realized by at least one dielectric interruption (39) in the connecting cable (30).

5. Device (10) as claimed in claim 3, **characterized in that** the electric isolation or the high electric impedance is realized by isolating materials of a gear pump, peristaltic pump (32) or reciprocating pump which are arranged in the connecting cable (30).

6. Device (10) as claimed in claim 1, **characterized in that** an end of a connecting cable (30b) connected to an electrode, which end is averted from the UV-light generating body (12), is connected to ground.

## Revendications

1. Dispositif (10) de traitement photochimique d'un milieu liquide, dans lequel le dispositif (10) présente deux canaux d'écoulement (16a, 16b) pour le passage du milieu liquide, qui sont délimités au moins par endroits par une surface de sortie de lumière UV (14) au moins d'un corps générant une lumière UV (12), **caractérisé en ce que** le corps générant une lumière UV (12) est réalisé en tant que parallélépipède rectangle plat et les canaux d'écoulement (16a, 16b) sont réalisés des deux côtés directement sur les surfaces de sortie de lumière (14) respectives de celui-ci, que les canaux d'écoulement (16a, 16b) sont délimités respectivement sur un premier côté par une paroi métallique (36a, 36b) et, sur un deuxième côté opposé, par la surface de sortie de lumière (14) du corps générant une lumière UV (12), que la paroi métallique (36a, 36b) respective sert d'électrode, dans lequel une des électrodes (36a) est mise à la terre et la tension de service est appliquée au corps générant une lumière UV (12) sur l'autre électrode (36b), que le milieu liquide est directement mis en contact au moyen des électrodes (36a, 36b) dans chaque canal d'écoulement (16a, 16b), et que, pendant le fonctionnement du dispositif, une différence de potentiel est appliquée entre les canaux et l'énergie électrique est injectée par cette tension dans le plasma du corps générant une lumière UV, ce qui a pour effet que le plasma est allumé ou maintenu.

2. Dispositif selon la revendication 1, **caractérisé en ce qu'**au moins une conduite de raccordement (30c, 30d) du milieu liquide reliée à une électrode (36b) est isolée électriquement de la terre pendant le fonctionnement du corps générant une lumière UV (12).

3. Dispositif (10) selon l'une quelconque des revendications précédentes, **caractérisé en ce qu'**une conduite de raccordement (30c, 30d) pour le milieu liquide s'écoulant à travers le dispositif (10) est isolée électriquement de parties d'installation mises à la terre ou que la conduite de raccordement (30c, 30d) présente elle-même une impédance électrique élevée.

4. Dispositif (10) selon la revendication 3, **caractérisé en ce que** l'impédance électrique élevée est réalisée par au moins une coupure diélectrique (39) dans la conduite de raccordement (30).

5. Dispositif (10) selon la revendication 3, **caractérisé en ce que** l'isolation électrique ou l'impédance électrique élevée est réalisée par des matériaux, disposés dans la conduite de raccordement (30) et isolants, d'une pompe à engrenages, pompe péristaltique (32) ou pompe à piston.

6. Dispositif (10) selon la revendication 1, **caractérisé en ce qu'**une extrémité, opposée au corps générant une lumière UV (12), d'une conduite de raccordement (30b) reliée à une électrode présente une mise à la terre (34).
